# EUROPEAN PATENT APPLICATION

(11) **EP 4 325 041 A1**
(43) Date of publication of application: **21.02.2024**
(21) Application number: 22832619.5
(22) Date of filing: 12.05.2022
(51) Int. Cl.: F02D 45/00

(54) **ENGINE DIAGNOSIS SYSTEM, ENGINE DIAGNOSIS METHOD, PROGRAM, DATA RELAY DEVICE, AND DATA ANALYSIS DEVICE**

(30) Priority: 30.06.2021 JP 2021108754
(71) Applicant: MITSUBISHI HEAVY INDUSTRIES ENGINE & TURBOCHARGER, LTD., Sagamihara-shi, Kanagawa 252-5293 (JP)
(72) Inventor: OKAZAKI, Yoshimi, Sagamihara-shi, Kanagawa 252-5293 (JP)
(74) Representative: Hoffmann Eitle
(86) International application number: PCT/JP2022/020090
(87) International publication number: WO 2023/276460

(57) **Abstract**

An engine diagnosis system (1) is provided with: a data collection device (11) that collects data relating to an operation situation of an engine E or an engine starting device ST; a data relay device (12) that processes the collected data; and a data analysis device (13) that analyzes the processed data.

## Description

### Technical Field

The present disclosure relates to an engine diagnosis system, an engine diagnosis method, a program, a data relay device, and a data analysis device. Priority is claimed on Japanese Patent Application No. 2021-108754, filed on June 30, 2021, the content of which is incorporated herein by reference.

### Background Art

PTL 1 discloses a plant facility diagnosis system including one or more sensor modules with a wireless communication function that are mounted on a plant facility and a state diagnosis device that diagnoses a state of a plant facility on the basis of transmission data transmitted from each of the sensor modules.

### Citation List

### Patent Literature

[PTL 1] Japanese Unexamined Patent Application Publication No. 2018-101369

### Summary of Invention

### Technical Problem

In the plant facility diagnosis system disclosed in PTL 1, since the state diagnosis device diagnoses the plant facility, it is possible to suppress the power consumption of the sensor modules. In addition, in a case in which the plant facility is in a normal state, the sensor module is configured to convert detection data into an amount of data suitable for communication and to transmit the data to the state diagnosis device. Therefore, the amount of data at the time of transmission is reduced, which makes it possible to suppress the power consumption of the sensor modules.

However, since PTL 1 discloses only root mean square processing as a data amount conversion method, there is no guarantee that the method can be optimally used even in other diagnosis systems with different types of detection data. In a case in which the method is used, it is possible to reduce a communication load that leads to an increase in the power consumption of the sensor module. However, since the method is not suitable for the detection data, there is a good possibility that the accuracy of diagnosis will be reduced.

The present disclosure has been made to solve the above problems, and an object of the present disclosure is to provide an engine diagnosis system, an engine diagnosis method, a program, a data relay device, and a data analysis device that can reduce a communication load and improve the accuracy of diagnosis.

### Solution to Problem

In order to achieve the object, according to the present disclosure, there is provided an engine diagnosis system for collecting, processing, and analyzing data related to an operating status of an engine or an engine starting device to diagnose a degree of deterioration of the engine or the engine starting device. The engine diagnosis system includes: a data collection device that collects and processes the data; and a data analysis device that analyzes the processed data. The data collection device includes a first data processing unit that converts the operating status of the engine or the engine starting device detected by a sensor into data, a second data processing unit that performs predetermined indexing according to a type of generated data obtained by the data conversion, and a data transmission unit that transmits indexed data obtained by the indexing to an outside, and the data analysis device includes a data receiving unit that receives the indexed data from the outside, a third data processing unit that analyzes the received indexed data to diagnose the degree of deterioration of the engine or the engine starting device, and a data transmission unit that transmits the diagnosis result to an external server.

In addition, according to the present disclosure, there is provided an engine diagnosis method for collecting, processing, and analyzing data related to an operating status of an engine or an engine starting device to diagnose a degree of deterioration of the engine or the engine starting device. The engine diagnosis method is performed using a data collection device that collects and processes the data and a data analysis device that analyzes the processed data and includes: executing, via the data collection device, a first data processing step of converting the operating status of the engine or the engine starting device detected by a sensor into data, a second data processing step of performing predetermined indexing according to a type of generated data obtained by the data conversion, and a data transmission step of transmitting indexed data obtained by the indexing to an outside; and executing, via the data analysis device, a data receiving step of receiving the indexed data from the outside, a third data processing step of analyzing the received indexed data to diagnose the degree of deterioration of the engine or the engine starting device, and a data transmission step of transmitting the diagnosis result to an external server.

Further, according to the present disclosure, there is provided a program executed by a computer of an engine diagnosis system for collecting, processing, and analyzing data related to an operating status of an engine or an engine starting device to diagnose a degree of deterioration of the engine or the engine starting device. The engine diagnosis system includes a data collection device that collects and processes the data and a data analysis device that analyzes the processed data. The program causes a computer of the data collection device to execute a first data processing step of converting the operating status of the engine or the engine starting device detected by a sensor into data, a second data processing step of performing predetermined indexing according to a type of generated data obtained by the data conversion, and a data transmission step of transmitting indexed data obtained by the indexing to an outside. The program causes a computer of the data analysis device to execute a data receiving step of receiving the indexed data from the outside, a third data processing step of analyzing the received indexed data to diagnose the degree of deterioration of the engine or the engine starting device, and a data transmission step of transmitting the diagnosis result to an external server.

### Advantageous Effects of Invention

According to each of the above-described aspects, it is possible to reduce a communication load and to improve the accuracy of diagnosis.

### Brief Description of Drawings

Fig. 1 is a diagram illustrating a configuration of an engine diagnosis system according to an embodiment of the present disclosure.
Fig. 2 is a block diagram illustrating a functional configuration of a data collection device according to the embodiment of the present disclosure.
Fig. 3 is a flowchart illustrating a flow of a process of the data collection device according to the embodiment of the present disclosure.
Fig. 4 is a block diagram illustrating a functional configuration of a data relay device according to the embodiment of the present disclosure.
Fig. 5 is a flowchart illustrating a flow of a process of the data relay device according to the embodiment of the present disclosure.
Fig. 6 illustrates an example of data related to a change in an exhaust gas temperature of an engine over time according to the embodiment of the present disclosure.
Fig. 7 is a block diagram illustrating a functional configuration of a data analysis device according to the embodiment of the present disclosure.
Fig. 8 is a flowchart illustrating a flow of a process of the data analysis device according to the embodiment of the present disclosure.

### Description of Embodiments

### <Embodiment>

### (Configuration of Engine Diagnosis System)

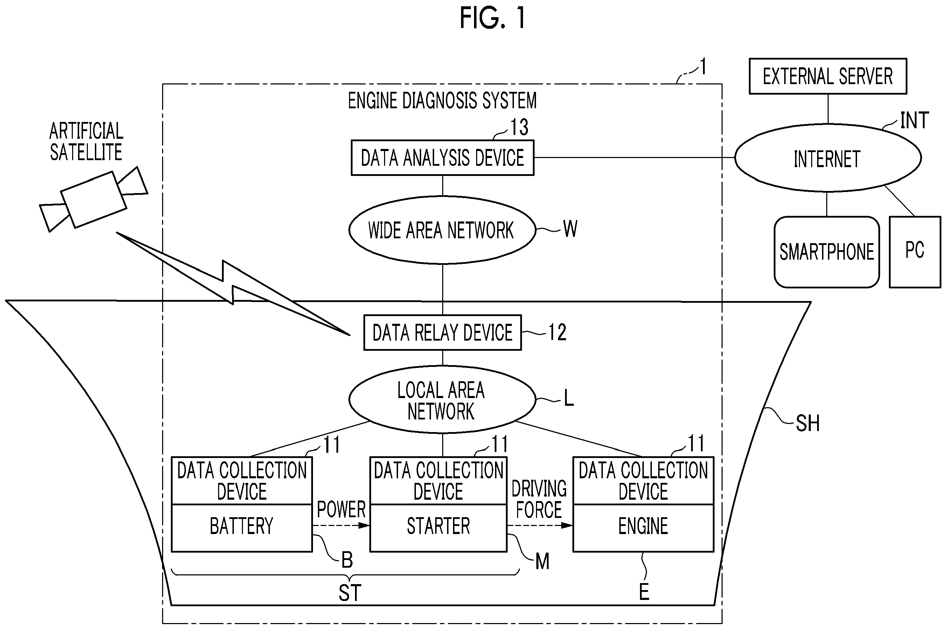

Hereinafter, an engine diagnosis system 1 according to an embodiment of the present disclosure will be described with reference to Fig. 1.

The engine diagnosis system 1 includes a data collection device 11, a data relay device 12, and a data analysis device 13. In the embodiment of the present disclosure, for example, a case is assumed in which the data collection device 11 and the data relay device 12 are installed in a ship SH and the data analysis device 13 is installed in a facility on land. When the ship SH approaches the land, communication can be performed between the ship SH and the facility.

The data collection device 11 is a device that collects and processes data related to an operating status of an engine E or an engine starting device ST that is provided in the ship. The engine starting device ST is composed of a battery B and a starter M. The starter M is a motor for starting the engine E, is supplied with power from the battery B, and operates. In a case in which the engine E is powered by the starter M and a rotation speed of the engine E exceeds a predetermined value, the engine E is changed to a starting state. The data collection device 11 is installed at an optimum position of the engine E or the engine starting device ST and collects data related to the operating status of the engine E or the engine starting device ST through a sensor. The data collected from the engine E is, for example, data related to a change in the rotation speed of the engine E over time and data related to a change in exhaust gas temperature over time. In addition, the data collected from the battery B is, for example, data related to a change in the voltage of the battery B over time. The data collection device 11 transmits the collected and processed data to the data relay device 12 through a local area network L. Either wired communication or wireless communication may be used for the local area network L. For example, a wired LAN can be used as the wired communication. In addition, for example, a wireless LAN, Bluetooth (registered trademark), or ZigBee (registered trademark) can be used as the wireless communication.

The data relay device 12 is a device that processes the data related to the operating status of the engine E or the engine starting device ST which has been transmitted from the data collection device 11. The data relay device 12 processes the data received from the data collection device 11 into an optimum amount of data. The data relay device 12 transmits the processed data to the data analysis device 13 through a wide area network W. It is desirable to use cellular communication, such as 3G or 4G, or relatively wide area wireless communication called Low Power Wide Area (LPWA) for the wide area network W since a communication distance of up to about 10 km between the ship and the land is assumed. In addition, the data relay device 12 can acquire information related to the current position of the ship through a GPS.

The data analysis device 13 is a device that analyzes the processed data related to the operating status of the engine E or the engine starting device ST which has been transmitted from the data relay device 12. The data analysis device 13 analyzes the data received from the data relay device 12, using statistical analysis or machine learning, to diagnose the degree of deterioration of the engine E or the engine starting device ST. The data analysis device 13 transmits data related to the diagnosis result to an external server through the Internet INT. The data analysis device 13 may be implemented by a program stored in a cloud server. The diagnosis result can be visualized through an application of the external server to be viewed by a terminal such as a smartphone or a PC.

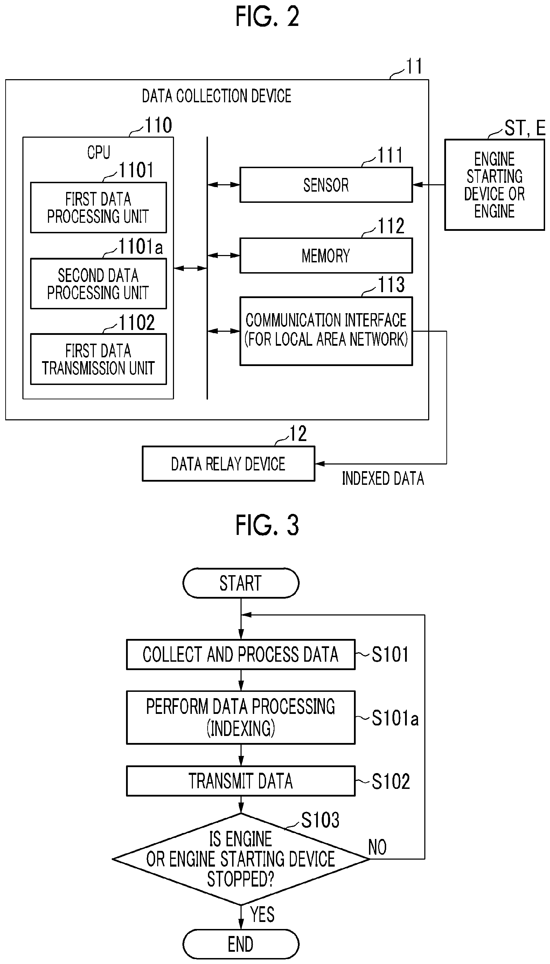

Hereinafter, the data collection device 11 will be described in detail with reference to Figs. 2 and 3.

### (Functional Configuration of Data Collection Device)

Fig. 2 is a block diagram illustrating a functional configuration of the data collection device 11.

The data collection device 11 includes a CPU 110, a sensor 111, a memory 112, and a communication interface 113.

The CPU 110 performs a process of generating the data related to the operating status of the engine E or the engine starting device ST and controls the transmission of the data. The CPU 110 is composed of a first data processing unit 1101 that performs the process of generating the data, a second data processing unit 1101a that performs a process of indexing the generated data, and a first data transmission unit 1102 that transmits the processed indexed data to the data relay device 12. A detailed control flow of the data collection device 11 performed by the CPU 110 will be described below with reference to Fig. 3.

The sensor 111 detects the operating status of the engine E or the engine starting device ST. The sensor 111 is installed at an optimum position of each of the engine E and the battery B and the starter M constituting the engine starting device ST. The sensor 111 installed in the engine E detects, for example, the rotation speed of the engine E and the exhaust gas temperature. In addition, the sensor 111 installed in the battery B detects, for example, the voltage of the battery B. Since these factors are usually detected as analog signals, they are converted into digital data in response to an instruction from the CPU 110.

The memory 112 is a so-called main storage device and has a storage area necessary for the CPU 110 to perform a process based on a program. In this embodiment, in particular, the memory 112 stores, for example, the data related to the operating status of the engine E or the engine starting device ST which has been converted into digital data.

The communication interface 113 performs connection to the local area network W when the data processed and collected by the data collection device 11 is transmitted to the data relay device 12.

### (Flow of Process of Data Collection Device)

Fig. 3 is a flowchart illustrating a flow of a process of the data collection device 11. The CPU 110 of the data collection device 11 controls the process.

When the operating status of the engine E or the engine starting device ST is detected by the sensor 111, the first data processing unit 1101 converts the detected analog signal into data, that is, digital data and stores the digital data in the memory 112 (Step S101). The sensor 111 installed in the engine E generates, for example, the data related to the change in the rotation speed of the engine E over time and the data related to the change in the exhaust gas temperature over time. In addition, the sensor 111 installed in the battery B generates the data related to the change in the voltage of the battery B over time. Each of the data items is generated as time-series data having a constant time interval by a sampling process and is stored in the memory 112.

Then, the second data processing unit 1101a extracts only information necessary for diagnosing the degree of deterioration of the engine E or the engine starting device ST from the data generated in Step S101 (hereinafter, also referred to as generated data), indexes the generated data, and stores the result in the memory 122 (Step S101a). Data processing of the indexing will be described below.

Then, the first data transmission unit 1102 issues an instruction to transmit the data indexed by the process in Step S101a (hereinafter, also referred to as indexed data) to the data relay device 12 (Step S102) . In response to the instruction, an optimum communication protocol corresponding to the type of the local area network W to be used is generated, and the indexed data is transmitted to the data relay device 12 through the communication interface 113. In addition, the first data transmission unit 1102 can control, for example, the frequency and timing of data transmission.

When the operation of the engine E or the engine starting device ST is stopped, the sensor 111 is not capable of detecting anything. Therefore, the process of the data collection device 11 ends (Step S103: Yes). While the engine E or the engine starting device ST is in operation, the process of the data collection device 11 is continued (Step S103: No).

In addition, the process in Step S103 is not limited to the above-described aspect. For example, the process may be performed as follows. That is, the data collection device 11 according to another embodiment may continue observation, processing, and transmission processes until the power of the data collection device 11 is turned off even after the operation of the engine E or the engine starting device ST is stopped. Further, in this case, for example, the number of sampling operations per unit time may be increased (a sampling cycle may be shortened) at an engine start timing. As described above, since a high-speed sampling period for which the number of sampling operations is larger than usual is provided, it is possible to analyze data in detail for the period for which a fluctuation is large.

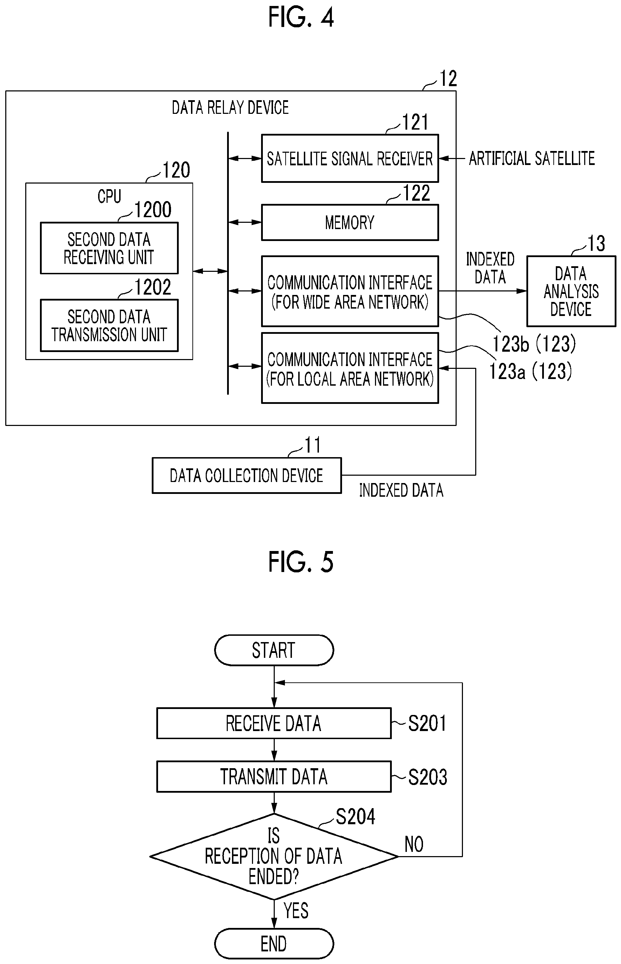

Hereinafter, the data relay device 12 will be described in detail with reference to Figs. 4 to 8.

### (Functional Configuration of Data Relay Device)

Fig. 4 is a block diagram illustrating a functional configuration of the data relay device 12.

The data relay device 12 includes a CPU 120, a satellite signal receiver 121, a memory 122, and a communication interface 123.

The CPU 120 controls the transmission and reception of the indexed data related to the operating status of the engine E or the engine starting device ST which has been received from the data collection device 11. The CPU 120 includes a second data receiving unit 1200 that receives the indexed data and a second data transmission unit 1202 that transmits the indexed data to the data analysis device 13. A detailed control flow of the data relay device 12 performed by the CPU 120 will be described below with reference to Fig. 5.

The satellite signal receiver 121 receives information related to the current position of the ship SH provided with the engine E or the engine starting device ST through the GPS. The received positional information of the ship SH is time-series data and can be associated with the data related to the operating status of the engine E or the engine starting device ST through a time axis.

The memory 122 is a so-called main storage device and has a storage area necessary for the CPU 110 to perform the process based on the program. The memory 122 according to this embodiment stores the data related to the operating status of the engine E or the engine starting device ST which has been received from the data collection device 11. The CPU 120 extracts only the information necessary for diagnosing the degree of deterioration of the engine E or the engine starting device ST from the data to index the data. Therefore, when the data is transmitted to the data analysis device 13, the amount of data is optimized. The data obtained by the indexing (hereinafter, also referred to as indexed data) is stored in the memory 122.

The communication interface 123 is composed of a communication interface 123a for a local area network and a communication interface 123b for a wide area network. The communication interface 123a for a local area network performs connection to the local area network L when data is received from the data collection device 11. The communication interface 123b for a wide area network performs connection to the wide area network W when the data (indexed data) processed by the data relay device 12 is transmitted to the data analysis device 13.

### (Flow of Process of Data Relay Device)

Fig. 5 is a flowchart illustrating a flow of a process of the data relay device 12. The CPU 120 of the data relay device 12 controls the process.

The second data receiving unit 1200 receives the indexed data related to the operating status of the engine E or the engine starting device ST from the data collection device 11 through the communication interface 123a for a local area network (Step S201). The received indexed data is, for example, the indexed data related to the change in the rotation speed of the engine E over time, the indexed data related to the change in the exhaust gas temperature over time, and the indexed data related to the change in the voltage of the battery B over time which have been generated by the data collection device 11. All of the received indexed data is stored in the memory 122.

The second data transmission unit 1202 issues an instruction to transmit the received indexed data to the data analysis device 13 (Step S203). In response to the instruction, a communication protocol corresponding to the type of the wide area network W to be used is generated, and the indexed data is transmitted to the data analysis device 13 through the communication interface 123b for a wide area network. In addition, the second data transmission unit 1202 can control, for example, the frequency and timing of data transmission. Therefore, the data relay device 12 can transmit the indexed data to the data analysis device 13 at a frequency of, for example, once an hour.

In a case in which the reception of the indexed data from the data collection device 11 is interrupted for a certain period, the process of the data relay device 12 ends (Step S204: Yes). In a case in which the reception of the data continues without being interrupted for a certain period, the process of the data relay device 12 is continued (Step S204: No).

### (Specific Example of Indexing Process)

Hereinafter, a specific example of the indexing process in Step S101a (Fig. 3) will be described in detail.

First, as an example of the indexing process, the indexing of the generated data related to the change in the rotation speed of the engine E over time will be described.

The second data processing unit 1101a extracts an engine rotation speed R₁ which is a rotation speed of the engine E at the time of an initial operation, an engine rotation speed R₂ which is a rotation speed at the time of ignition, and an engine rotation speed R₃ which is a rotation speed at a rated time from the generated data obtained by the first data processing unit 1101. The engine rotation speed R₁, the engine rotation speed R₂, and the engine rotation speed R₃ are extracted when the rotation speed of the engine E reaches a certain rotation speed by the start of cranking by the starter M, when the rotation speed of the engine E discontinuously increases due to ignition, and when the rotation speed of the engine E reaches a rated value, respectively. In addition, the second data processing unit 1101a extracts a time until the engine E reaches the engine rotation speed R₁ from the start of rotation and a time until the engine E reaches the engine rotation speed R₂ from the start of rotation as an arrival time t_{E1} to the engine rotation speed R₁ and an arrival time t_{E2} to the engine rotation speed R₂, respectively. In addition, the second data processing unit 1101a calculates an engine output O₂ and an engine output O₃ from the engine rotation speed R₂ and the engine rotation speed R₃, respectively, using the fact that the output of the engine E is proportional to the cube of the rotation speed of the engine E.

Each data item related to the change in the rotation speed of the engine E over time can be extracted as one index value each time the operation and stop of the engine E are repeated.

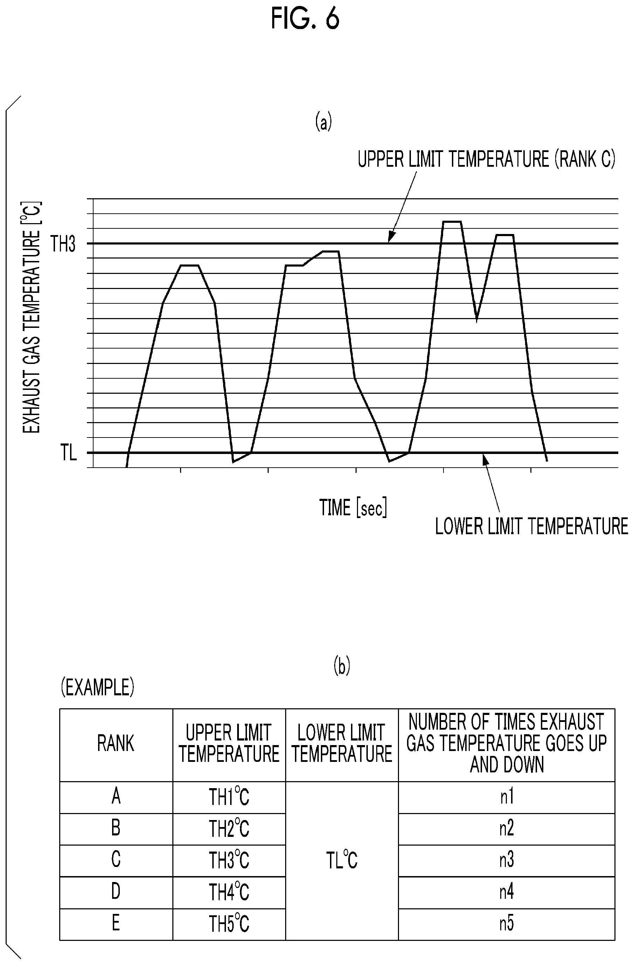

In addition, as another example of the indexing process, the indexing of the generated data related to the change in the exhaust gas temperature of the engine E over time will be described with reference to Fig. 6.

A graph illustrated in Fig. 6A illustrates an example of the generated data obtained by the first data processing unit 1101. The second data processing unit 1101a extracts the number of times T the exhaust gas temperature T goes up and down from the generated data. An upper limit value and a lower limit value are set for the exhaust gas temperature in advance, and the number of times T the exhaust gas temperature goes up and down is determined according to how many times the exhaust gas temperature oscillates within the range. For example, in a case in which a state in which the exhaust gas temperature is less than the lower limit value is defined as a starting point, when the exhaust gas temperature rises, exceeds the upper limit value, falls, and is less than the lower limit value, the number of times the exhaust gas temperature goes up and down is counted as one, and the number of repetitions of the movement for a certain period is defined as the number of times T the exhaust gas temperature goes up and down. When the upper limit value is ranked at predetermined temperature intervals (in this case, the lower limit value is fixed), the number of times T the exhaust gas temperature goes up and down can be determined for each rank, for example, as illustrated in Fig. 6B.

Each data item related to the change in the exhaust gas temperature of the engine E over time can be extracted as one index value each time the operation and stop of the engine E are repeated.

In addition, as still another example of the indexing process, the indexing of the generated data related to the change in the output voltage of the battery B (hereinafter, also referred to as a "battery voltage") over time will be described.

After the cranking of the engine E by the starter M is started, a current flows to the starter M, and the voltage of the battery is reduced. When the rotation speed of the engine E by the starter M increases to a predetermined level, the engine E ignites, and the rotation speed starts to further increase, the energization of the starter M is stopped, and the voltage of the battery returns to a normal voltage.

The degree of reduction in the voltage of the battery (reduced voltage) at the time of this operation, the time until the voltage is restored, the rotation speed reached by the starter M, and the amount of change in the rotation speed are indexed.

Each of the data related to the change in the output voltage of the battery B over time and the data related to the change in the rotation speed of the starter M can be extracted as one index value each time the operation and stop of the engine E are repeated. In addition, in the above-described process, the "start of cranking" is defined as a time when the output voltage of the battery B is reduced to a predetermined percentage (R1%) of a battery steady-state voltage Vc.

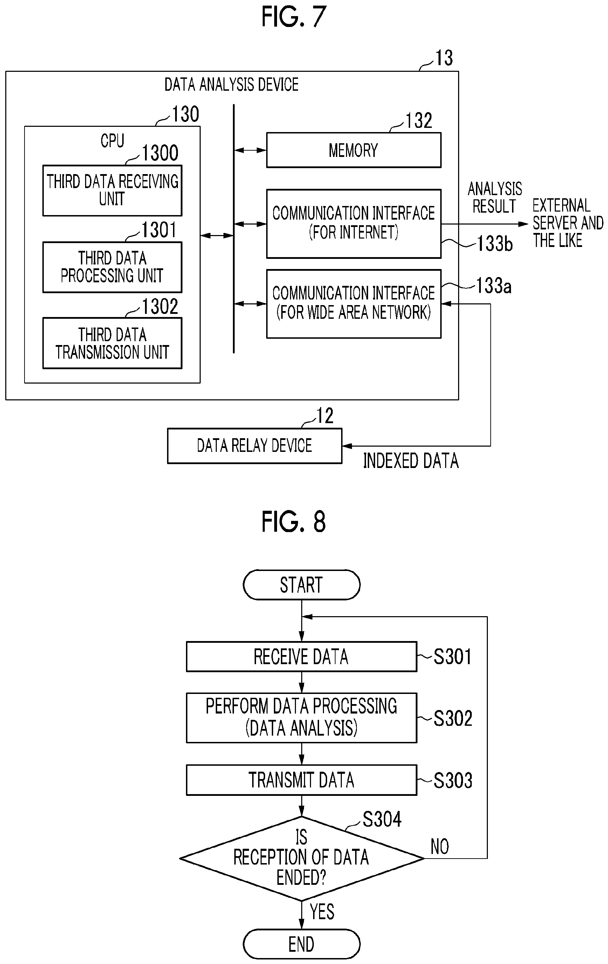

Hereinafter, the data analysis device 13 will be described in detail with reference to Figs. 7 and 8.

### (Functional Configuration of Data Analysis Device)

Fig. 7 is a block diagram illustrating a functional configuration of the data analysis device 13.

The data analysis device 13 includes a CPU 130, a memory 132, and a communication interface 133.

The CPU 130 performs arithmetic processing and transmission and reception control on the indexed data related to the operating status of the engine E or the engine starting device ST which has been received from the data relay device 12. The CPU 130 is composed of a third data receiving unit 1300 that receives the data, a third data processing unit 1301 that performs the arithmetic processing on the data, and a third data transmission unit 1302 that transmits the processed data to, for example, an external server. A detailed control flow of the data analysis device 13 performed by the CPU 130 will be described below with reference to Fig. 8.

The memory 132 stores the indexed data related to the operating status of the engine E or the engine starting device ST which has been received from the data relay device 12. In addition, the memory 132 is a so-called main storage device and has a storage area necessary for the CPU 130 to perform the process based on the program. The CPU 130 also performs, for example, collation with operation data or the like at the time of engine shipment which has been input to a data analysis processing program in advance and analyzes the data, using statistical analysis or machine learning, to diagnose the degree of deterioration of the engine E or the engine starting device ST. Data related to the diagnosis result is stored in the memory 132.

The communication interface 133 is composed of a communication interface 133a for a wide area network and a communication interface 133b for the Internet. The communication interface 133a for a wide area network performs connection to the wide area network W when receiving data from the data relay device 12. The communication interface 133b for the Internet performs connection to the Internet INT when transmitting the data processed by the data analysis device 13 to, for example, the external server.

### (Flow of Process of Data Analysis Device)

Fig. 8 is a flowchart illustrating a flow of a process of the data analysis device 13. The CPU 130 of the data analysis device 13 controls the process.

The third data receiving unit 1300 receives the indexed data related to the operating status of the engine E or the engine starting device ST from the data relay device 12 through the communication interface 133a for a wide area network (Step S301). The data to be received is, for example, the indexed data related to the change in the rotation speed of the engine E, the indexed data related to the change in the exhaust gas temperature over time, and the indexed data related to the change in the voltage of the battery B over the time which have been obtained by the indexing of the data relay device 12. All of the data items are stored in the memory 132.

Then, the third data processing unit 1301 analyzes the received indexed data, using statistical analysis or machine learning, to diagnose the degree of deterioration of the engine E or the engine starting device ST and stores the result in the memory 132 (Step S302).

For example, the analysis of the indexed data related to the change in the rotation speed of the engine E over time will be described.

The third data processing unit 1301 calculates a starter deterioration degree MD₁ indicating the degree of deterioration of the starter M as seen from the viewpoint of the rotation speed of the engine E, on the basis of the relationship between the received engine rotation speed R₁ and engine rotation speed R₂. Further, the third data processing unit 1301 calculates a starter deterioration degree MD₂ indicating the degree of deterioration of the starter M considering a temporal viewpoint, on the basis of the relationship between the received arrival time t_{E1} to the engine rotation speed R₁ and the received arrival time t_{E2} to the engine rotation speed R₂. In a case in which a predicted value of each index is calculated, a machine learning method, such as linear regression or a neural network, may be used. Then, a starter deterioration degree MD indicating the degree of deterioration of the starter M from a comprehensive viewpoint is calculated in consideration of, for example, the weighting of the obtained starter deterioration degree MD₁ and starter deterioration degree MD₂. When the starter deterioration degree MD is calculated, a fluctuation range of the rotation speed of the engine E at the time of cranking by the starter M may be further considered. In that case, setting is performed such that the indexed data related to a variation in the rotation speed of the engine can be received from the data relay device 12.

In addition, the third data processing unit 1301 calculates an engine deterioration degree ED₁ indicating the degree of deterioration of the engine E as seen from the viewpoint of the rotation speed of the engine E on the basis of the relationship between the received engine rotation speed R₂ and engine rotation speed R₃. Further, an engine deterioration degree ED₂ indicating the degree of deterioration of the engine E as seen from the viewpoint of the output of the engine E is calculated on the basis of the relationship between the received engine output O₂ and engine output O₃. In a case in which a predicted value of each index is calculated, the machine learning method, such as linear regression or a neural network, may be used. Then, an engine deterioration degree ED indicating the degree of deterioration of the engine E from a comprehensive viewpoint is calculated in consideration of, for example, the weighting of the engine deterioration degree ED₁ and the engine deterioration degree ED₂. When the engine deterioration degree ED is calculated, a fluctuation range of the rotation speed of the engine E after engine ignition may be further considered. In that case, setting is performed such that the indexed data related to a variation in the rotation speed of the engine can be received from the data relay device 12.

In addition, for example, the analysis of the indexed data related to the change in the exhaust gas temperature of the engine E over time will be described.

The third data processing unit 1301 can set a predetermined threshold value in advance and diagnose the degree of deterioration of the engine E on the basis of whether or not the received number of times T the exhaust gas temperature goes up and down exceeds the threshold value. In addition, it is possible to diagnose the degree of deterioration of the engine E on the basis of the time until the number of times T reaches the threshold value. In a case in which data for each of the ranks in which the upper limit values of the exhaust gas temperatures are different is received from the data relay device 12, it is possible to diagnose the degree of deterioration of the engine E for each of the ranks.

In addition, for example, the analysis of the indexed data related to the change in the voltage of the battery B over time will be described.

The third data processing unit 1301 calculates a battery deterioration degree BD₁ indicating the degree of deterioration of the battery B as seen from the viewpoint of the voltage drop of the battery B, on the basis of the relationship among the received battery reduced voltage V₁, battery reduced voltage V₂, and battery reduced voltage V₃. In addition, the battery deterioration degree BD₂ indicating the degree of deterioration of the battery B considering a temporal viewpoint is calculated on the basis of the relationship among a received battery depletion time t_{B1}, a received battery depletion time t_{B2}, and a received battery depletion time t_{B3}. In a case in which a predicted value of each index is calculated, the machine learning method, such as linear regression or a neural network, may be used. Then, a battery deterioration degree BD indicating the degree of deterioration of the battery B from a comprehensive viewpoint is calculated in consideration of, for example, the weighting of the obtained battery deterioration degree BD₁ and battery deterioration degree BD₂.

Following the analysis of the indexed data by the third data processing unit 1301, the third data transmission unit 1302 issues an instruction to transmit the analysis result to, for example, the external server (Step S303) . In response to the instruction, an Internet communication protocol is generated, and the analysis result is transmitted to, for example, the external server through the communication interface 133b for the Internet. In addition, the third data transmission unit 1302 can control, for example, the frequency or timing of data transmission. Further, the data may be transmitted in response to a request from, for example, the external server.

In a case in which the reception of the data from the data relay device 12 is interrupted for a certain period (for example, in a case in which the ship goes offshore and it is difficult to perform communication with the land through the wide area network W), the process of the data analysis device 13 ends (Step S304: Yes). In a case in which the reception of data continues without being interrupted for a certain period, the process of the data analysis device 13 is continued (Step S304: No).

### (Operation and Effect)

In the engine diagnosis system, the engine diagnosis method, and the program having the above-described configuration, it is possible to reduce a communication load and to improve the accuracy of diagnosis.

### (Other Embodiments)

The embodiment of the present disclosure has been described in detail above with reference to the drawings. However, the specific configuration is not limited to the embodiment, but includes, for example, design changes within a scope not departing from the gist of the present disclosure.

For example, the engine diagnosis system 1 according to the above-described embodiment separately includes the data collection device 11 and the data relay device 12. However, the engine diagnosis system is not limited to this aspect in other embodiments. For example, in an engine diagnosis system 1 according to another embodiment, the data collection device 11 may have the functions of the data relay device 12 and function as an integrated device.

### Industrial Applicability

According to each aspect of the present invention, it is possible to reduce the communication load and to improve the accuracy of diagnosis.

### Reference Signs List

1: Engine diagnosis system
11: Data collection device
110: CPU
1101: First data processing unit
1101a: Second data processing unit
1102: First data transmission unit
111: Sensor
112: Memory
113: Communication interface (for local area network)
12: Data relay device
120: CPU
1200: Second data receiving unit
1202: Second data transmission unit
121: Satellite signal receiver
122: Memory
123a: Communication interface (for local area network)
123b: Communication interface (for wide area network)
13: Data analysis device
130: CPU
1300: Third data receiving unit
1301: Third data processing unit
1302: Third data transmission unit
132: Memory
133a: Communication interface (for wide area network)
133b: Communication interface (for Internet)
2: External server
3: Artificial satellite
E: Engine
B: Battery
M: Starter
ST: Engine starting device
SH: Ship
L: Local area network
W: Wide area network
INT: Internet

## Claims

1. An engine diagnosis system for collecting, processing, and analyzing data related to an operating status of an engine or an engine starting device to diagnose a degree of deterioration of the engine or the engine starting device, the engine diagnosis system comprising:
a data collection device that collects and processes the data; and
a data analysis device that analyzes the processed data,
wherein the data collection device includes a first data processing unit that converts the operating status of the engine or the engine starting device detected by a sensor into data, a second data processing unit that performs predetermined indexing according to a type of generated data obtained by the data conversion, and a data transmission unit that transmits indexed data obtained by the indexing to an outside, and
the data analysis device includes a data receiving unit that receives the indexed data from the outside, a third data processing unit that analyzes the received indexed data to diagnose the degree of deterioration of the engine or the engine starting device, and a data transmission unit that transmits the diagnosis result to an external server.

2. The engine diagnosis system according to claim 1,
wherein the data collection device collects data related to a change in a rotation speed of the engine over time and performs predetermined indexing on the data.

3. The engine diagnosis system according to claim 2,
wherein the data analysis device calculates a predetermined degree of deterioration of the engine or the engine starting device on the basis of the indexed data obtained by the indexing of data collection device.

4. The engine diagnosis system according to claim 1,
wherein the data collection device collects data related to a change in an exhaust gas temperature of the engine over time and performs predetermined indexing on the data.

5. The engine diagnosis system according to claim 4,
wherein the data analysis device calculates a predetermined degree of deterioration of the engine on the basis of the indexed data obtained by the indexing of the data collection device.

6. The engine diagnosis system according to claim 5,
wherein the data analysis device calculates the degree of deterioration for each predetermined rank of the exhaust gas temperature.

7. The engine diagnosis system according to claim 1,
wherein the data collection device collects data related to a change in a voltage of a battery over time and performs predetermined indexing on the data.

8. The engine diagnosis system according to claim 7,
wherein the data analysis device calculates a predetermined degree of deterioration of the battery on the basis of the indexed data obtained by the indexing of the data collection device.

9. The engine diagnosis system according to any one of claims 1 to 8,
wherein the data collection device has a high-speed sampling period in which the number of sampling operations is larger than usual.

10. The engine diagnosis system according to any one of claims 1 to 8,
wherein the data analysis device calculates a predetermined degree of deterioration of the engine or the engine starting device using statistical analysis or machine learning.

11. An engine diagnosis method for collecting, processing, and analyzing data related to an operating status of an engine or an engine starting device to diagnose a degree of deterioration of the engine or the engine starting device, the engine diagnosis method being performed using a data collection device that collects and processes the data and a data analysis device that analyzes the processed data and comprising:
executing, via the data collection device, a first data processing step of converting the operating status of the engine or the engine starting device detected by a sensor into data, a second data processing step of performing predetermined indexing according to a type of generated data obtained by the data conversion, and a data transmission step of transmitting indexed data obtained by the indexing to an outside; and
executing, via the data analysis device, a data receiving step of receiving the indexed data from the outside, a third data processing step of analyzing the received indexed data to diagnose the degree of deterioration of the engine or the engine starting device, and a data transmission step of transmitting the diagnosis result to an external server.

12. A program executed by a computer of an engine diagnosis system for collecting, processing, and analyzing data related to an operating status of an engine or an engine starting device to diagnose a degree of deterioration of the engine or the engine starting device,
the engine diagnosis system including a data collection device that collects and processes the data and a data analysis device that analyzes the processed data,
the program causing a computer of the data collection device to execute a first data processing step of converting the operating status of the engine or the engine starting device detected by a sensor into data, a second data processing step of performing predetermined indexing according to a type of generated data obtained by the data conversion, and a data transmission step of transmitting indexed data obtained by the indexing to an outside and
causing a computer of the data analysis device to execute a data receiving step of receiving the indexed data from the outside, a third data processing step of analyzing the received indexed data to diagnose the degree of deterioration of the engine or the engine starting device, and a data transmission step of transmitting the diagnosis result to an external server.

13. A data collection device included in an engine diagnosis system for collecting, processing, and analyzing data related to an operating status of an engine or an engine starting device to diagnose a degree of deterioration of the engine or the engine starting device, the data collection device comprising:
a first data processing unit that converts the operating status of the engine or the engine starting device detected by a sensor into data;
a second data processing unit that performs predetermined indexing according to a type of generated data obtained by the data conversion; and
a data transmission unit that transmits indexed data obtained by the indexing to an outside.

14. A data analysis device included in an engine diagnosis system for collecting, processing, and analyzing data related to an operating status of an engine or an engine starting device to diagnose a degree of deterioration of the engine or the engine starting device, the data analysis device comprising:
a third data receiving unit that receives predetermined indexed data from an outside;
a data processing unit that analyzes the received indexed data to diagnose the degree of deterioration of the engine or the engine starting device; and
a third data transmission unit that transmits the diagnosis result to an external server.
